# EUROPEAN PATENT APPLICATION

(11) **EP 4 523 989 A1**
(43) Date of publication of application: **19.03.2025**
(21) Application number: 23197191.2
(22) Date of filing: 13.09.2023
(51) Int. Cl.: B60W 60/00, B60W 40/02

(54) **AUTONOMOUS VEHICLE OPERATION METHOD IN A CAR WASH, COMPUTER PROGRAM, VEHICLE SYSTEM AND VEHICLE**

(71) Applicant: Wuhan Lotus Cars Co., Ltd., Wuhan, Hubei (CN)
(72) Inventor: Bauer, Klaus, 55545 Bad Kreuznach (DE); Khan, Bilal, 65462 Ginsheim-Gustavsburg (DE); Pätzold, Anna, 55131 Mainz (DE); Spielmannleitner, Tobias, 85092 Kösching (DE); Meier, Torben, 60486 Frankfurt am Main (DE)
(74) Representative: Elzaburu S.L.P.

(57) **Abstract**

The invention relates to a method (300) of operating a vehicle system (110) of a vehicle (100) comprises determining (310), by means of the vehicle system (110), a presence of at least one automatic car wash facility (W1; W2) in a proximity of the vehicle (100); determining (320), by means of the vehicle system (110), an intention of a user (D) of the vehicle (100) to use the automatic car wash facility (W1; W2); and, determining (330), by means of the vehicle system (110), a type of the automatic car wash facility (W1; W2) among a plurality of types of automatic car wash facilities (W1; W2) based on environment sensor data obtained by means of at least one environment sensor (130) of the vehicle system (110). Determining (330) the type of the automatic car wash facility (W1; W2) comprises analyzing the obtained environment sensor data with respect to one or more of the plurality of types of automatic car wash facilities (W1; W2) using a trained algorithm. The method (300) further comprises controlling (340), by means of the vehicle system (110) and based at least partially on the determined type of the automatic car wash facility (W1; W2), at least one function (140) of the vehicle (100). The invention further relates to a corresponding computer program, vehicle system and vehicle.

## Description

The present application relates to a method of operating a vehicle system of a vehicle. The present application further relates to a computer program product, a vehicle system and a vehicle.

### Background

Diverse types of automatic car wash facilities are known. Some automatic car wash facilities comprise one or more guide rails or transport rails on which a vehicle to be washed is moved through different sections of the car wash facility, according to successive stages of the washing process, including, for example, a pre-washing stage, a washing stage, a drying stage and a finishing or post-treatment stage. Other types of automatic car wash facilities are adapted to a stationary position of a vehicle to be washed. Such facilities typically comprise an arrangement of movable tools, which can be successively moved over the surface of a standing vehicle, including, for example, a movable pre-washing tool, a movable washing (e.g., spraying, brushing, and rinsing) tool, a movable drying tool and a movable finishing or post-treatment tool. Automatic car wash facilities of this type typically comprise at least one pair of cylindrical, vertical, brushes which are arranged on both sides of a vehicle position, and which are rotated while being moved parallel to a length direction of the vehicle. Apart from the aforesaid types, other automatic car wash facilities are known or conceivable.

Different types of automatic car wash facilities demand different actions from a driver who intends to use a car wash facility. For example, automatic car wash facilities with a guide rail or a transport rail normally require that a gear of the vehicle is disengaged for the vehicle to be moved freely along the rail. In contrast, automatic car wash facilities adapted for a stationary position of the vehicle typically require that a gear of the vehicle is engaged, or the vehicle be put in a parking mode, for the vehicle to stand securely during the impact of moving tools, such as rotating and/or sliding brushes, etc. Furthermore, many types of automatic car wash facilities demand that a driver places the vehicle at a specific position, which in some cases permits little tolerance, such as with a guide rail or a transport rail. Moreover, vehicles often need to be conditioned for an intended washing process, for example, by closing movable windows of the vehicle, a movable roof, setting movable side mirrors of the vehicle in a suitable position, etc.

The demands which are posed on drivers by the various types of automatic car wash facilities can be troublesome, or even difficult to fulfill, for many users. Furthermore, the number of actions demanded from a driver in preparation of a washing process occasionally leads to situations in which a driver has forgotten to take one or more of the required actions, for example, by not closing a window of the vehicle. In such cases, damage may occur to objects inside the vehicle or to the vehicle itself, or a user may decide to abort an ongoing washing process.

In DE 10 2012 016 432 A1, an automatic car wash facility is described which broadcasts a radio signal in which an identity of the car wash facility and/or corresponding location information is encoded. A vehicle approaching the facility receives the radio signal and determines, based on the encoded information, an autonomous driving maneuver for automatically driving the vehicle into the facility and potentially disengage a gear.

The use of radio signals, however, as described in DE 10 2012 016 432 A1, can pose difficulties in that a universal coding scheme for ideally all automatic car wash facilities is to be established. Moreover, for existing car wash facilities, the use of a radio signal demands that a suitable transmitter is retrofitted to each existing facility.

There is thus a need for improved operation of a vehicle system.

### Summary of the Invention

Accordingly, there is provided a method according to claim 1, a computer program product according to claim 13, a vehicle system according to claim 14, and a vehicle according to claim 15.

According to a first aspect, a method of operating a vehicle system of a vehicle is provided. The method comprises determining, by means of the vehicle system, a presence of at least one automatic car wash facility in a proximity of the vehicle, determining, by means of the vehicle system, an intention of a user of the vehicle to use the automatic car wash facility, and determining, by means of the vehicle system, a type of the automatic car wash facility among a plurality of types of automatic car wash facilities based on environment sensor data obtained by means of at least one environment sensor of the vehicle system. Determining the type of the automatic car wash facility comprises analyzing the obtained environment sensor data with respect to one or more of the plurality of types of automatic car wash facilities using a trained algorithm. The method further comprises controlling, by means of the vehicle system and based at least partially on the determined type of the automatic car wash facility, at least one function of the vehicle.

The provided method enables that one or more functions of a vehicle can be automatically controlled in accordance with each of various types of automatic car wash facilities in a vehicle-based, for example, an entirely vehicle-based, manner. In this way, providing external functionalities, such as signal transmitters and/or other dedicated installations at an automatic car wash facility for implementing an automatic control of a vehicle function, can be dispensed with. This allows for a reduction of material and costs. It also allows for an expanded use of the method, for example, with any existing, conventional, car wash facility. The method benefits from the provision of environment sensors, in particular cameras, radars, ultrasound sensors and/or lidars, as well as computing resources, which are found in many vehicle systems, in particular in vehicles with a capability for autonomous driving and/or parking. The method also benefits from the observation that many types of automatic car wash facilities have sensorily detectable features, such as structural and/or visual contours, visual instruction or information signs, and the like, which are indicative of the respective facility type and, accordingly, of one or more vehicle functions which need to be operated or invoked for using the car wash facility. In particular, an algorithm can be effectively trained, for example, in connection with a machine learning process, for analyzing environment sensor data which is obtainable by the vehicle system with respect to different types of automatic car wash facilities to determine each of different types based on corresponding sensor data.

The at least one function may pertain to an autonomous driving capability of the vehicle.

At least one of the plurality of types of automatic car wash facilities may correspond to an automatic car wash facility having a guide rail and/or a transport rail for a vehicle to be washed. The at least one function may comprise autonomously positioning the vehicle with respect to the at least one of the guide rail or the transport rail and/or, upon determining that the vehicle has been positioned with respect to the at least one of the guide rail or the transport rail, autonomously disengaging a gear of the vehicle.

In addition, or as an alternative, at least one of the plurality of types of automatic car wash facilities may correspond to an automatic car wash facility adapted for a stationary position of a vehicle to be washed. The at least one function may comprise autonomously positioning the vehicle at the stationary position and/or, upon determining that the vehicle has been positioned at the stationary position, autonomously activating a parking mode of the vehicle.

In addition, or as an alternative, at least one of the plurality of types of automatic car wash facilities may correspond to an automatic car wash facility adapted for a position of a vehicle to be washed between a plurality of brushes of the automatic car wash facility, the plurality of brushes arranged on different sides of the vehicle to be washed. The at least one function may comprise autonomously positioning the vehicle between the plurality of brushes.

The at least one environment sensor may comprise one or more of a camera, a lidar sensor, a radar sensor and/or an ultrasound sensor of the vehicle system.

The trained algorithm may be stored by means of an on-board device, in particular by means of a storage device of an on-board control unit, of the vehicle system. Moreover, analyzing the obtained environment sensor data with respect to one or more of the plurality of types of automatic car wash facilities using the trained algorithm may be performed by means of the on-board device, in particular by means of a processor of the on-board control unit.

The method may further comprise receiving, via a communication module of the vehicle system, updated algorithm data for the trained algorithm, and updating, by means of the on-board device, the trained algorithm in accordance with the received updated algorithm data.

The updated algorithm data may pertain to one or more updated types of automatic car wash facilities. The provision of updated algorithm data pertaining to one or more updated types of automatic car wash facilities may facilitate an, in particular dynamic, adaption of the method to other types of automatic car wash facilities. This may include an integration of additional types of automatic car wash facilities to the plurality of types and/or a replacement of existing types of the plurality of types, for example, with modified versions of the existing types.

In addition, or as an alternative, the updated algorithm data may pertain to updated classifying data for analyzing the obtained environment sensor data with respect to one or more of the plurality of types of automatic car wash facilities. The provision of updated algorithm data pertaining to updated classifying data may facilitate an, e.g., dynamic, adaption of the algorithm in connection with a continued training of the algorithm. In addition, or as an alternative, the provision of updated algorithm data pertaining to updated classifying data may facilitate an, e.g., dynamic, adaption of the algorithm in connection with respect to a more reliable and/or more efficient determining of one or more types of the plurality of types of automatic car wash facilities based on the updated classifying data.

The at least one function may comprise one or more functions relating to a conditioning of the vehicle for a washing process. Conditioning the vehicle for the washing process may further comprise setting one or more movable windows of the vehicle to a closed position, setting a movable roof of the vehicle to a closed position and/or setting one or more movable side mirrors of the vehicle to a predetermined position.

According to another aspect, a computer program product is provided. The computer program product comprises portions of program code which, when executed by a processor of a vehicle system of a vehicle, configure the vehicle system to perform the method as presently provided.

According to another aspect, a vehicle system is provided. The vehicle system comprises a processor and a storage device operatively coupled to the processor, wherein the storage device comprises portions of program code which, when executed by the processor, cause the vehicle system to perform the method as presently provided.

According to another aspect, a vehicle is provided. The vehicle comprises a vehicle system as presently provided.

### Brief Description of the Figures

Further details, advantages and objectives of the invention become apparent from the drawings and the detailed description. There is shown in the drawings:
- Figs. 1 and 2: a vehicle with a vehicle system in different situations according to an example;
- Fig. 3: a flow diagram of a method of operating a vehicle system according to an example;
- Fig. 4: a control unit for a vehicle according to an example.

### Detailed Description

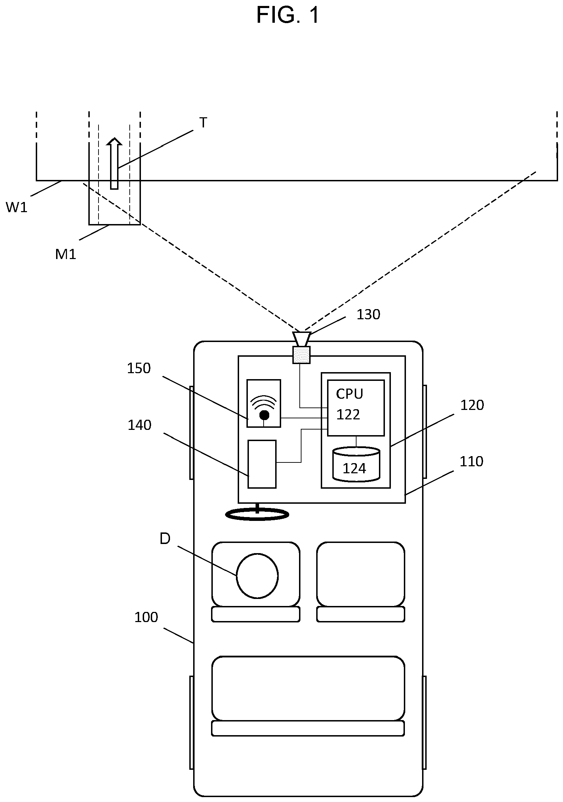

Fig. 1 shows schematically and exemplarily a vehicle 100. The vehicle 100 comprises a vehicle system 110. The vehicle system 110 includes a control unit 120, which comprises a processor 122 and a data storage device 124 operatively connected to the processor 122. The vehicle system 110 further comprises one or more environment sensors 130 adapted to detect an environment or objects within an environment of the vehicle 100. The vehicle system 110 further comprises at least one controllable function 140. In the shown example, the vehicle system 110 also comprises a communication unit 150 adapted to receive communication signals, for example, radio signals, over a communication network to which the vehicle system 110 is connected. The environment sensor 130, the function 140, and the communication unit 150 are operatively connected to the processor 122 of the control unit 120.

Fig. 1 further shows an automatic car wash facility W1, which is in a proximity of the vehicle 100. The automatic car wash facility W1 comprises a transport rail M1, which is adapted to transport a vehicle to be washed through the automatic car wash facility W1, as indicated by the arrow T. Conventionally, a driver of a vehicle who intends to use the automatic car wash facility W1 needs to position his or her vehicle on, or at, the transport rail M1. In addition, in order that the vehicle will be freely movable along the transport rail M1, the driver needs to disengage a gear of the vehicle.

As schematically shown in Fig. 1, the driver D of the vehicle 100 has approached the automatic car wash facility W1 in such manner that parts of the automatic car wash facility W1 lie within the detection range of the environment sensor 130. Moreover, the transport rail M1 of the automatic car wash facility W1 is within the detection range of the environment sensor 130. In this case, a structural feature, or contour, of the automatic car wash facility W1 which is indicative of a type of the automatic car wash facility W1 is detected by means of the environment sensor 130. The environment sensor 130 accordingly generates a sensor signal, and outputs the generated sensor signal towards the processor 122 of the control unit 120, indicating the presence of the transport rail M1 as part of the automatic car wash facility W1. In other examples, other or additional detectable features of the automatic car wash facility W1, which are indicative of the type of the automatic car wash facility W1, are detected by means of the one or more environment sensors 130 of the vehicle system 110.

The control unit 120 determines the presence of the automatic car wash facility W1 in the proximity of the vehicle 100. Determining the presence of the automatic car wash facility W1 is performed, for example, by applying an object recognition algorithm, such as an image analysis algorithm, on some or all of the environment sensor data obtained from the one or more environment sensors 130. In other examples, the presence of the automatic car wash facility W1 in the proximity of the vehicle 100 is determined by the control unit 120 additionally or alternatively based on geographic information, for example, based on a present location of the vehicle 100 obtained from a GPS unit (not shown) of the vehicle system 110, and a comparison of the present location of the vehicle 100 with stored cartographic information indicating the location of the automatic car wash facility W1. In further examples, determining the presence of the automatic car wash facility W1 is additionally or alternatively performed based on user input provided by the driver D of the vehicle 100 to the vehicle system 110. For example, the user input indicates the driver's D intention to use an automatic car wash facility, which in that case is presupposed to be in a proximity of the vehicle 100. In other examples, the presence of the automatic car wash facility W1 in a proximity of the vehicle 100 is determined by the control unit 120 based on additional and/or other information than described above.

The control unit 120 further determines a type of the automatic car wash facility W1 among a plurality of types of automatic car wash facilities. In the example, the environment sensor data obtained from the environment sensor 130 is indicative of the transport rail M1. Where the environment sensor 130 includes a camera, for example, a perspective view of a portion of the transport rail M1 is contained in image data which has been acquired by means of the camera comprised by the one or more environment sensors 130 and which has been output towards the processor 122. The control unit 120 determines the presence of the transport rail M1, which in turn is indicative of the type of automatic car wash facility represented by the automatic car wash facility W1. Accordingly, by analyzing the environment sensor data, the control unit 120 is adapted to determine the type of the automatic car wash facility W1. For this purpose, a trained algorithm is applied by the processor 122 on the obtained environment sensor data. For example, the trained algorithm is adapted to analyze environment sensor data obtained from the environment sensor 130 with respect to the presence of indicative features, such as the transport rail M1, contained in the sensor data, and to determine based on the identified indicative features a type of the automatic car wash facility. In some examples, the data storage device 124 contains for this purpose associated lists of indicative features and of types of automatic car wash facilities, wherein each type of automatic car wash facilities is associated with a particular combination of one or more of the indicative features.

The control unit 120 further determines whether the driver D intends to use the automatic car wash facility W1. The driver's D intention to use the cover facility W1 is in some examples determined based on a control input, such as a tactile or verbal input, provided by the driver D to the vehicle system 110. In other examples, the driver's D intention to use the automatic car wash facility W1 is determined additionally or alternatively based on a driving behavior of the driver D, for example, when the driver D steers the vehicle 100 towards the automatic car wash facility W1 by less than a threshold distance between the automatic car wash facility W1 and the vehicle 100, for example.

When an intention of the driver D to use the automatic car wash facility W1 and a type of the automatic car wash facility W1 have been determined by the vehicle system 110, the control unit 120 controls one or more functions 140 of the vehicle system 110 in accordance with the determined type of the automatic car wash facility W1 and the driver's D intention to use the automatic car wash facility W1. Examples of the one or more functions 140 which may be controlled in this manner include an autonomous driving capability of the vehicle 100. For example, the autonomous driving capability of the vehicle 100 is controlled in such way that the vehicle 100 autonomously drives towards the transport rail M1 to a position in which the transport rail M1 engages one or more wheels or other portions of the vehicle 100, thereby facilitating a transportation of the vehicle 100 by means of the transport rail M1 during the washing process. In addition, or as an alternative, the one or more functions 140 comprise disengaging a gear of the vehicle 100 when the vehicle system 110 has determined that the vehicle 100 has been suitably positioned relative to the transport rail M1 either manually or by an autonomous driving capability.

In other examples, the one or more functions 140 comprise conditioning the vehicle 100 for the imminent washing process. Conditioning the vehicle 100 for the washing process includes in some examples automatically closing any open windows of the vehicle 100, closing a movable roof of the vehicle 100, and or setting a movable side mirror of the vehicle 100 to a suitable position.

In some examples, the vehicle system 110 further determines that a washing process has finished. Upon determining that the washing process has finished, the vehicle system 110 outputs a notification and/or a prompt to the user in relation to the finished washing process, for example, an acoustic notification that the washing process has finished and/or a prompt to leave the automatic car wash facility and continue a journey.

While the automatic car wash facility W1 demands that the vehicle 100 be positioned in a manner that enables engaging of the transport rail M1 and subsequent disengaging of a gear of the vehicle 100, other types of car wash facilities demand other maneuvers and/or actions being taken on the vehicle 100 with respect to the automatic car wash facility. As described above, the data storage device 124 contains in some examples a database of multiple types of automatic car wash facilities and associated indicative features of each of those types as detectable by means of one or more environmental sensors 130 of the vehicle 100. In addition, in some examples, each of the types of automatic car wash facilities is associated in the database with corresponding one or more functions 140 of the vehicle system 110 and/or a particular mode of operating these functions 140 in accordance with the respective type of automatic car wash facility.

In the example shown in Fig. 1, the vehicle system 110 further includes a communication unit 150 connected to the control unit 120. Via the communication unit 150, updated algorithm data can be provided to the vehicle system 110, for example, by a service provider, who can transmit the updated algorithm data via a wireless communication network. The updated algorithm data is used by the processor 122 for updating the trained algorithm in accordance with the received updated data.

Updated algorithm data which is received by means of the communication unit 150 includes in some examples updated types of automatic car wash facilities. In this way, the vehicle system 110 can be dynamically adapted to changes, such as technical innovations, modifications and/or extensions, among the types of automatic car wash facilities. In other examples, the updated algorithm data contains updated classifying data for analyzing the environment sensor data with respect to the types of automatic car wash facilities. For example, improvements of the trained algorithm which result from continued training or new classifiers which have been found to enable more efficient or more reliable analysis of the environment sensor data can in this way be communicated to the vehicle system 110. In this way, a maintenance and/or an improvement of a functionality of the vehicle system 110 is achievable wirelessly.

In other examples, updating the vehicle system 110 is performed by wire, for example, at regular intervals, at a service provider's workshop.

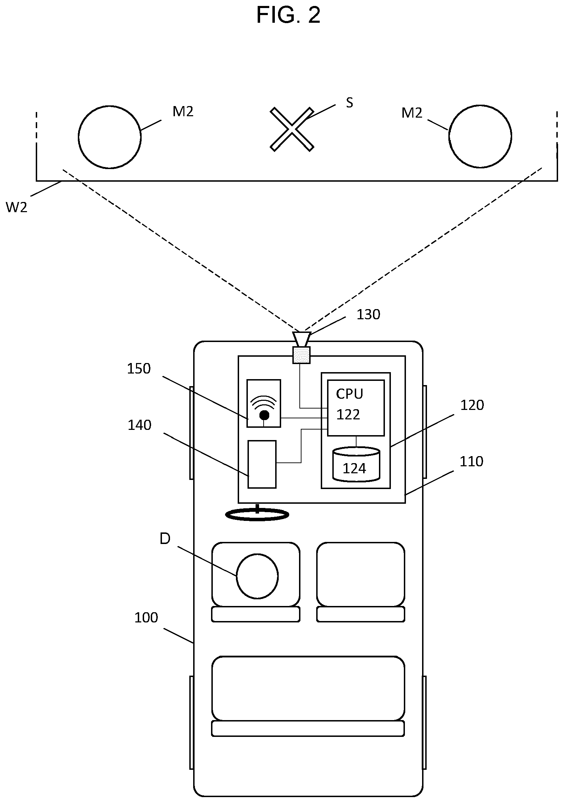

Fig. 2 shows exemplarily and schematically the vehicle 100 in the proximity of an automatic car wash facility W2. The vehicle 100 shown in Fig. 2 corresponds to the vehicle 100 in Fig 1. Identical reference signs as in Fig. 1 designate identical features.

The automatic car wash facility W2 is of a different type than the automatic car wash facility W1. In the shown example, the automatic car wash facility W2 comprises a pair of cylindrical brushes M2, which are arranged vertically on both sides of a vehicle to be washed. For using the automatic car wash facility W2, a driver is required to position his or her vehicle at a stationary position S between the cylindrical brushes M2. In addition, the cylindrical brushes M2 are arranged to slide along the side surfaces of the vehicle to be washed, parallel to a length direction of the vehicle. Therefore, to ensure that the vehicle stands safely at the stationary position S during the washing process, for example, despite the impacting brushes M2, a driver is demanded to engage a gear of the vehicle or place the vehicle in a parking mode.

In the shown example, the pair of vertical brushes M2 lies within the detection range of the environment sensor 130. Furthermore, the pair of vertical brushes M2 is an indicative feature of the type of the automatic car wash facility W2. Corresponding to the situation in Fig. 1, the control unit 120 analyzes the obtained environment sensor data with respect to indicative features contained in the environment sensor data and with respect to a corresponding type of automatic car wash facility associated with the indicative features.

When the vehicle system 110 has determined the type of the automatic upper facility W2 and an intention of the driver D to use the automatic car wash facility W2, one or more vehicle functions 140 are controlled automatically in accordance with the type of the automatic car wash facility W2. In examples in which the one or more functions 140 include an autonomous driving capability of the vehicle 100, for example, the vehicle 100 is autonomously driven towards the stationary position S. In addition, the vehicle 100 is subsequently put in a parking mode, or a gear is set to be engaged, by the vehicle system 110.

In the above description of Figs. 1 and 2, the functioning of the vehicle system 110 has been described in the context of particular types of automatic car wash facilities and corresponding indicative features as detectable by means of typical environment sensors 130, such as a camera, of the vehicle 100. Nonetheless, it will be appreciated that the described effects and advantages of the vehicle system 110 are achievable in other examples in connection with other or additional types of automatic car wash facilities, based on other or additional indicative features, by using other or additional types of environment sensor data, by operating other or additional functions of the vehicle, and the like.

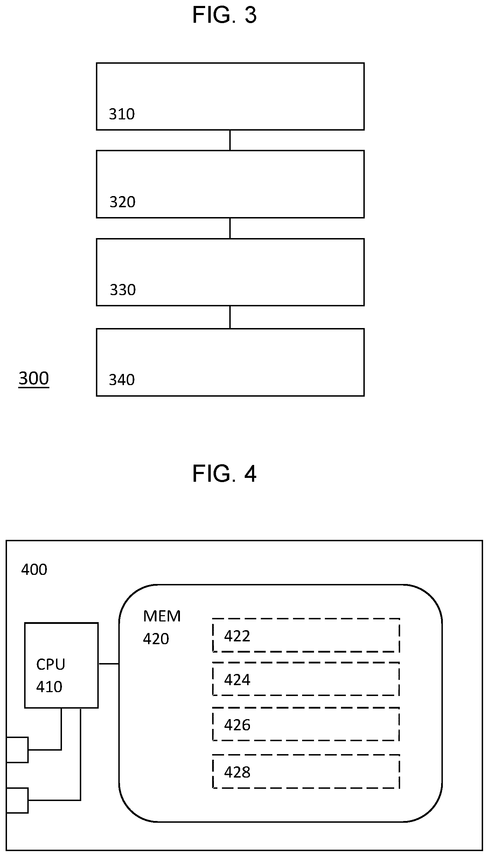

Fig. 3 shows a flow diagram of a method 300 of operating a vehicle system of a vehicle. The method 300 is executable, for example, by means of the vehicle system 110 shown in Figs. 1 and 2, as described above.

In particular, the method 300 comprises determining, by means of the vehicle system, a presence of at least one automatic car wash facility in a proximity of the vehicle, step 310. The method 300 further comprises determining, by means of the vehicle system, an intention of a user of the vehicle to use the automatic car wash facility, step 320, and determining, by means of the vehicle system, a type of the automatic car wash facility among a plurality of types of automatic car wash facilities based on environment sensor data obtained by means of at least one environment sensor of the vehicle system, step 330.

Step 330 of the method 300, i.e., determining the type of the automatic car wash facility, comprises analyzing the obtained environment sensor data with respect to one or more of the plurality of types of automatic car wash facilities using a trained algorithm. The method 300 further comprises controlling, by means of the vehicle system, at least one function of the vehicle based at least partially on the determined type of the automatic car wash facility, step 340.

Fig. 4 shows schematically and exemplarily a control unit 400 for a vehicle system of a vehicle. The control unit 400 comprises a processor 410 which is operatively connected to a memory device 420. Furthermore, the control unit 400 is configured to receive and/or output data signals via one or more interfaces, as schematically indicated in Fig. 4.

The memory device 420 stores program code which is executable by means of the processor 410. The control unit 400 is implementable by way of an on-board control unit, such as the control unit 120 of the vehicle system 110 in Figs. 1 and 2. In other examples, the control unit 400 is implemented at least partially at one or more network nodes which are in network communication with an on-board vehicle system to receive data from the vehicle system and or output and transmit generated data towards the vehicle system via a communication network.

The memory device 420 stores program code which, when executed by means of the processor 410, configure the control unit 400 to perform operations according to any of the examples described above in connection with Figs. 1 to 3.

In particular, the memory device 420 stores program code which, by interaction with the processor 410, constitute a facility presence determining module 422 for determining the presence of at least one automatic car wash facility in a proximity of the vehicle. The memory device 420 further stores program code constituting a user intention determining module 424 for determining an intention of a user of the vehicle to use the automatic car wash facility. The memory device 420 further stores program code constituting a facility type determining module 426 for determining a type of the automatic car wash facility among a plurality of types of automatic car wash facilities based on environment sensor data obtained by means of at least one environment sensor of the vehicle system. The facility type determining module 426 is configured to determine the type of the automatic car wash facility at least partially by analyzing the obtained environment sensor data with respect to one or more of the plurality of types of automatic car wash facilities using a trained algorithm. The memory device 420 further stores program code constituting a vehicle function controlling module 432 for controlling at least one function of the vehicle based at least partially on the determined type of the automatic car wash facility.

## Claims

1. Method (300) of operating a vehicle system (110) of a vehicle (100), the method comprising:
- determining (310), by means of the vehicle system (110), a presence of at least one automatic car wash facility (W1; W2) in a proximity of the vehicle (100);
- determining (320), by means of the vehicle system (110), an intention of a user (D) of the vehicle (100) to use the automatic car wash facility (W1; W2);
- determining (330), by means of the vehicle system (110), a type of the automatic car wash facility (W1; W2) among a plurality of types of automatic car wash facilities (W1; W2) based on environment sensor data obtained by means of at least one environment sensor (130) of the vehicle system (110), wherein determining the type of the automatic car wash facility (W1; W2) comprises analyzing the obtained environment sensor data with respect to one or more of the plurality of types of automatic car wash facilities (W1; W2) using a trained algorithm, and
- controlling (340), by means of the vehicle system (110) and based at least partially on the determined type of the automatic car wash facility (W1; W2), at least one function (140) of the vehicle (100).

2. Method according to claim 1, wherein the trained algorithm is stored by means of an on-board device (120, 122, 124), in particular by means of a storage device (124) of an on-board control unit (120), of the vehicle system (110), and wherein analyzing the obtained environment sensor data with respect to one or more of the plurality of types of automatic car wash facilities (W1; W2) using the trained algorithm is performed by means of the on-board device (120, 122, 124), in particular by means of a processor (122) of the on-board control unit (120).

3. Method according to claim 2, further comprising:
- receiving, via a communication module (150) of the vehicle system (110), updated algorithm data for the trained algorithm, and
- updating, by means of the on-board device (120, 122, 124), the trained algorithm in accordance with the received updated algorithm data,
wherein the updated algorithm data pertains to at least one of the following:
- one or more updated types of automatic car wash facilities (W1; W2), or
- updated classifying data for analyzing the obtained environment sensor data with respect to one or more of the plurality of types of automatic car wash facilities (W1; W2).

4. Method according to any one of the preceding claims, wherein the at least one function (140) pertains to an autonomous driving capability of the vehicle (100).

5. Method according to claim 4, wherein at least one of the plurality of types of automatic car wash facilities (W1; W2) corresponds to an automatic car wash facility (W1) having a guide rail and/or a transport rail (M1, T) for a vehicle to be washed.

6. Method according to claim 5, wherein the at least one function (140) comprises:
- autonomously positioning the vehicle (110) with respect to the at least one of the guide rail or the transport rail (M1, T), and/or
- upon determining that the vehicle (100) has been positioned with respect to the at least one of the guide rail or the transport rail (M1, T), autonomously disengaging a gear of the vehicle (100).

7. Method according to any one of claims 4 to 6, wherein at least one of the plurality of types of automatic car wash facilities (W1; W2) corresponds to an automatic car wash facility (W2) adapted for a stationary position (S) of a vehicle to be washed.

8. Method according to claim 7, wherein the at least one function (140) comprises:
- autonomously positioning the vehicle (100) at the stationary position (S), and/or
- upon determining that the vehicle (100) has been positioned at the stationary position (S), autonomously activating a parking mode of the vehicle (100).

9. Method according to any one of claims 4 to 8, wherein at least one of the plurality of types of automatic car wash facilities (W1; W2) corresponds to an automatic car wash facility (W2) adapted for a position of a vehicle to be washed between a plurality of brushes (M2) of the automatic car wash facility (W2), the plurality of brushes (M2) arranged on different sides of the vehicle to be washed, and wherein the at least one function (140) comprises autonomously positioning the vehicle (100) between the plurality of brushes (M2).

10. Method according to any one of the preceding claims, wherein the at least one environment sensor (130) comprises one or more of a camera, a lidar sensor, a radar sensor and/or an ultrasound sensor of the vehicle system (110).

11. Method according to any one of the preceding claims, wherein the at least one function (140) comprises one or more functions relating to a conditioning of the vehicle (100) for a washing process.

12. Method according to claim 11, wherein conditioning the vehicle (100) for the washing process further comprises one or more of the following:
- setting one or more movable side mirrors of the vehicle (100) to a predetermined position,
- setting one or more movable windows of the vehicle (100) to a closed position,
- setting a movable roof of the vehicle (100) to a closed position.

13. Computer program product comprising portions of program code which, when executed by a processor (122; 410) of a vehicle system (110), configure the vehicle system (110) to perform the method according to any one of the preceding claims.

14. Vehicle system (110) comprising a processor (122; 410) and a storage device (124; 420) operatively coupled to the processor (122; 410), wherein the storage device (124; 420) comprises portions of program code which, when executed by the processor (122; 410), cause the vehicle system (110) to perform the method according to any one of claims 1 to 12.

15. Vehicle (100) comprising a vehicle system according to claim 14.
